# EUROPEAN PATENT APPLICATION

(11) **EP 3 260 902 A1**
(43) Date of publication of application: **27.12.2017**
(21) Application number: 15882555.4
(22) Date of filing: 17.02.2015
(51) Int. Cl.: G02B 21/36, G02B 21/06

(54) **MICROSCOPE**

(71) Applicant: Shimadzu Corporation, Kyoto 604-8511 (JP)
(72) Inventor: UEDA, Atsushi, Kyoto-shi Kyoto 604-8511 (JP)
(74) Representative: Kilian Kilian & Partner
(86) International application number: PCT/JP2015/054265
(87) International publication number: WO 2016/132451

(57) **Abstract**

The purpose of the present invention is to provide a microscope equipped with an imaging device used for the positioning of a sample, the microscope capable of removing distortion and blind spots from an image generated by the imaging device and reducing cost by using a commercially available imaging device. A microscope 10 comprises: a sample holder (sample stage 12) for holding a sample S; a measurement light source (infrared light source 11) for irradiating the sample S held by the sample holder with irradiation light; a focusing optical element (Cassegrain mirror 13) for focusing measurement light derived from the irradiation light transmitted through or reflected from the sample S; a detection unit (infrared light detector 15) for detecting the measurement light focused by the focusing optical element; an image capture device for capturing the image of the sample S; and an objective optical system switching unit (revolver 18) arranged to switch either the focusing optical element or the image capture device with the other to a position facing the sample S.

## Description

### Technical field

The present invention relates to a microscope such as an infrared microscope or an ultraviolet microscope.

### Background Art

In infrared microscopes and ultraviolet microscopes, in general, before performing actual measurement by using infrared light or ultraviolet light, a positioning operation of capturing an image of a sample with visible light, specifying which position to be measured in the sample on the basis of the obtained image, and correcting the position of the sample so that the position is included in a measurement range is performed.

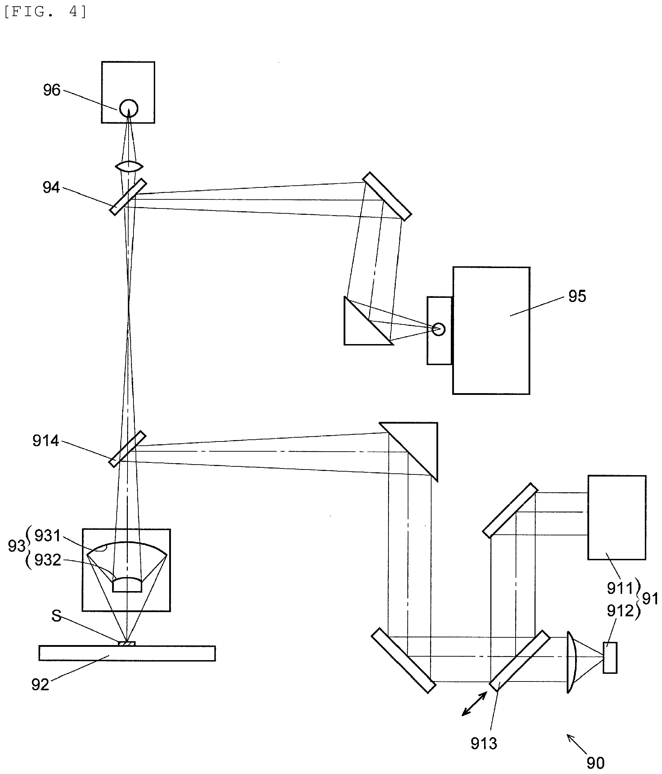

As an example, a typical infrared microscope 90 of the related art is illustrated in Fig. 4 as a schematic diagram. The infrared microscope 90 is configured to include a light source 91, a sample stage 92, a Cassegrain mirror 93, a beam splitter 94, an infrared light detector 95, and a visible light image capture device 96. The light source 91 is configured to include an infrared light source 911 and a visible light source 912. An optical path is switched by a switching mirror 913, so that one of infrared light and visible light is reflected by a half mirror 914 to pass through the Cassegrain mirror 93 as described later, and a sample S on the sample stage 92 is irradiated with the light. In addition, Fig. 4 illustrates the case of reflection measurement, whereas in the case of transmission measurement, the sample S is irradiated with light from the lower side of the sample. The Cassegrain mirror 93 is provided on the upper side of the sample stage 92 and is a combination of a primary mirror 931 configured with a downward concave mirror and a secondary mirror 932 configured with an upward convex mirror. The light from the light source 91 passes through an aperture (not shown) provided in the primary mirror 931, is reflected by the secondary mirror 932, and is further reflected by the primary mirror 931, so that the light is focused in a minute area on the sample S. Then, the light reflected from the sample S is reflected in the order of the primary mirror 931 and the secondary mirror 932 and is incident on the infrared light detector 95 or the visible light image capture device 96. The beam splitter 94 is a mirror that reflects the infrared light that has passed through the aperture of the primary mirror 931 and transmits the visible light that has passed through the aperture of the primary mirror. The infrared light detector 95 is provided on the optical path of the infrared light reflected by the beam splitter 94, and the visible light image capture device 96 is provided on the optical path of the visible light transmitted through the beam splitter 94. An image sensor using a CCD (Charge Coupled Device) or a CMOS (Complementary Metal-Oxide-Semiconductor Field-Effect Transistor) is used for the visible light image capture device 96.

In using the infrared microscope 90, first, the sample S is irradiated with the visible light from the light source 91, the image of the sample S is captured by the visible light image capture device 96, and the positioning operation on the sample is performed on the basis of the obtained image. After that, the light from the light source 91 is switched to infrared light, and the measurement is performed by detecting the infrared light reflected from the sample S (or transmitted through the sample S) by the infrared light detector 95.

In this infrared microscope 90, visible light passes through the Cassegrain mirror 93 in imaging the sample S, and thus, an image where a portion of the sample S (for example, an area where one side is about several hundred µm in the case of using the Cassegrain mirror having magnification of about X15) is magnified by the Cassegrain mirror 93 can be obtained in the visible light image capture device 96. For this reason, in the positioning operation, in order to search for the position of the measurement object in the sample S, the operation of moving the sample S little by little while monitoring the image needs be performed, and thus, it takes much time to perform the positioning operation. In addition, since the Cassegrain mirror has a shallow depth of focus (several µm), it is also difficult to align the position of the sample in the vertical direction with the focus, which is also a factor taking much time for the operation.

In order to avoid such a problem caused by the Cassegrain mirror, Patent Literature 1 discloses following two infrared microscopes configured so that visible light from the sample S is introduced into a visible light image capture device without passing through a Cassegrain mirror in a positioning operation.

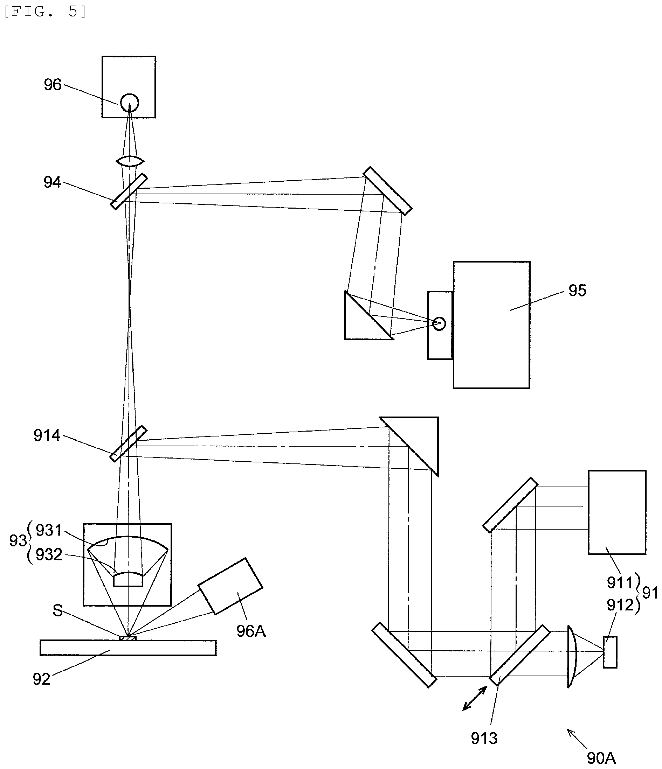

As illustrated in Fig. 5, in an infrared microscope 90A of a first example together with the (first) visible light image capture device 96 of the infrared microscope 90, a second visible light image capture device 96A that captures an image of the sample S obliquely from the upper side of the sample by using visible light is provided at the side of the Cassegrain mirror 93. Other configurations are the same as those of the infrared microscope 90 described above. The second visible light image capture device 96A captures an image of the sample S over a wide range with a lower magnification than the (first) visible light image capture device 96. Herein, since the second visible light image capture device 96A captures the image of the sample S obliquely from the upper side of the sample, distortion occurs in the image as it is, and thus, the distortion is removed by image compensation. The image compensation is performed on the basis of information on a deviation between the position of the grid point on the image obtained by capturing the image of the sample drawn with a grid figure by the second visible light image capture device 96A and the position of the grid point on the actual sample in the preliminary measurement.

A user of the infrared microscope 90A can search for the position of the measurement object by using an image having a wide field of view captured by the second visible light image capture device 96A and can easily perform the positioning operation on the sample S. In addition, since the second visible light image capture device 96A does not depend on the depth of focus of the Cassegrain mirror 93, it is possible to easily perform the focus alignment. After performing the positioning operation in this manner, the user can check that the positioning is correctly performed while viewing the magnified image of the narrow area by using the (first) visible light image capture device 96.

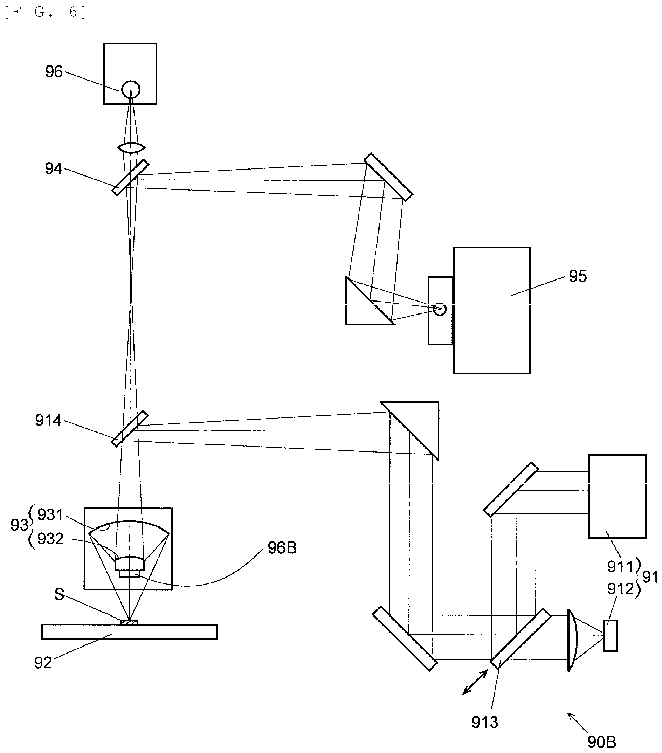

As illustrated in Fig. 6, the infrared microscope 90B of the second example has a small-sized second visible light image capture device 96B on the lower surface (the surface on the back side of the mirror surface) of the secondary mirror 932 of the Cassegrain mirror 93. Other configurations are the same as those of the infrared microscope 90 described above. The second visible light image capture device 96B captures an image of the sample S over a wide range with a lower magnification than the (first) visible light image capture device 96. In the second example, since the second visible light image capture device 96B captures an image from the lower surface of the secondary mirror 932 just above the sample S, it is possible to obtain an image having no distortion without performing image compensation. Similarly to the first example, by using the image, it is possible to search for the position of the measurement object from the image having a wide field of view and to easily perform the focus alignment, so that it is possible to easily perform the positioning operation on the sample S.

### Citation List

### Patent Literatures

Patent Literature 1: JP-A-2013-190554
Patent Literature 2: JP-A-11-044636

### Summary of the Invention

### Problem to be Solved by the Invention

However, in the infrared microscope 90A of the first example, if the numerical aperture is increased in order to increase the amount of focused light, the diameter of the Cassegrain mirror 93 is increased, and thus, the second visible light image capture device 96A needs to perform imaging from a shallower angle on the surface of the sample S. Then, distortion in the image becomes stronger, and thus, it is difficult to remove the distortion by image compensation. In addition, since the second visible light image capture device 96A performs imaging obliquely from the upper side of the sample S, in a case where there are irregularities on the surface of the sample S, a portion of the surface of the sample S is hidden by convex portions, so that blind sports occur. Furthermore, as disclosed in Patent Literature 2, in the case of performing measurement according to an ATR method (Attenuated Total Reflectance method), a prism needs be brought into contact with the surface of the sample, but the prism is attached to the bottom of the Cassegrain mirror with a prism holder. Then, there is no gap on the upper side of the sample, and thus, it impossible to perform the imaging obliquely from the upper side of the sample.

In the infrared microscope 90B of the second example, it is difficult to mount a commercially available visible light image capture device in a narrow area below the secondary mirror 932 of the Cassegrain mirror 93, and a small-sized visible light image capture device dedicated to the infrared microscope 90B equipped with CCD or CMOS on a substrate in the area needs to be manufactured. This becomes a factor of high costs.

An object of the present invention is to provide a microscope equipped with an imaging device for use in performing a positioning operation on a sample, in which distortion and blind spots do not occur in an image obtained by the imaging device, and costs can be suppressed by using a commercially available imaging device.

### Means for solving problem

In order to solve the above-described problems, according to the present invention, there is provided a microscope including:
a) a sample holder holding a sample;
b) a measurement light source irradiating the sample held by the sample holder with irradiation light;
c) a focusing optical element focusing measurement light derived from the irradiation light transmitted through the sample or reflected from the sample;
d) a detection unit detecting the measurement light focused by the focusing optical element;
e) an image capture device capturing an image of the sample; and
f) an objective optical system switching unit arranged to switch one of the focusing optical element and the image capture device to the other at a position facing the sample.

In the microscope according to the present invention, in performing the positioning of the sample, the image capture device is arranged at a position facing the sample by the objective optical system switching unit, and an image used for positioning is captured by the image capture device. After the positioning is performed on the basis of the image, the focusing optical element is arranged at a position facing the sample by the objective optical system switching unit, and the measurement light transmitted through the sample or reflected from the sample is focused by the focusing optical element and detected by the detection unit.

According to the present invention, in capturing the image for positioning, since no light focusing optical element is interposed, it is possible to obtain an image that is not magnified by the light focusing optical element. For this reason, it is possible to easily search for the position of the measurement object. In addition, according to the present invention, it is possible to easily perform even the operation of adjusting the position of the focus, which is difficult in a case where the focusing optical element is interposed therebetween. Since the imaging is performed from the position facing the sample, distortion and blind spots do not occur in the image as in the case of performing imaging from obliquely upward, and by increasing the amount of focused light or combining with a prism holder used in an ATR method, even if the focusing optical element becomes large in size, this will not be an obstacle to the imaging. Furthermore, since it is unnecessary to mount the image capture device in a narrow area as in the lower side of the secondary mirror of the Cassegrain mirror (focusing optical element), it is easy to use a commercially available CCD or CMOS image sensor, and it is possible to suppress the cost.

For the measurement light, infrared light, ultraviolet light, or the like can be used. Typically, an image capture device that captures an image with visible light is used for the image capture device, but an imaging sensor that detects infrared light or ultraviolet light may be used. In a case where the light detected by the image capture device is light in the same wavelength band as the measurement light (for example, using an infrared image sensor in an infrared microscope), the measurement light source, as it is, can be used for the light source in the image capturing by the image capture device. On the other hand, in a case where the wavelength of the light detected by the image capture device is different from the wavelength of the measurement light (for example, using an image capture device with visible light in an infrared microscope), an image capture light source that irradiates the sample with light having a wavelength which can be detected by the image capture device may be provided to the microscope according to the present invention.

For the objective optical system switching unit, a revolver that switches the focusing optical element and the image capture device by rotation can be appropriately used. Such a revolver is widely used in a microscope, and in the present invention, the revolver can be used as it is. Alternatively, for the objective optical system switching unit, an objective optical system switching unit which switches the light focusing optical element and the image capture device by linearly sliding can be used.

### Effect of the invention

According to the present invention, it is possible to achieve a microscope in which distortion and blind spots do not occur in an image used for positioning a sample and costs can be suppressed by using a commercially available imaging device.

### Brief Description of the Drawings

Fig. 1 is a diagram illustrating a schematic configuration of a microscope according to an embodiment of the present invention and illustrating a state in performing a positioning operation on a sample.
Fig. 2 is a picture illustrating an example of a visible image captured for a positioning operation by using the microscope according to the embodiment.
Fig. 3 is a diagram illustrating a state during measurement by infrared light in the microscope according to the embodiment.
Fig. 4 is a schematic configuration diagram illustrating an infrared microscope as an example of a microscope of the related art.
Fig. 5 is a schematic configuration diagram illustrating another example of the infrared microscope of the related art.
Fig. 6 is a schematic configuration diagram illustrating another example of the infrared microscope of the related art.

### Mode for Carrying Out the Invention

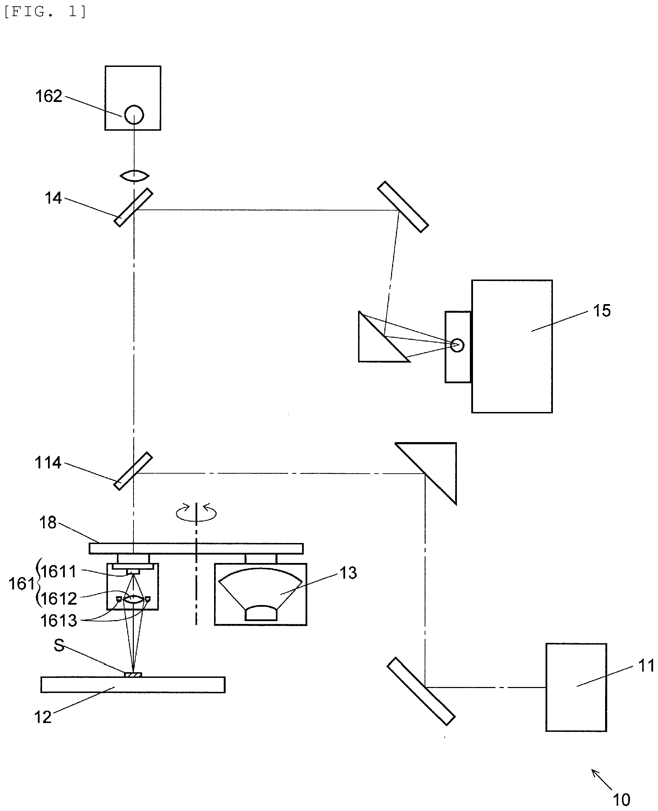

A microscope according to an embodiment of the present invention will be described with reference to Figs. 1 to 3.

Fig. 1 is a schematic configuration diagram illustrating main components of a microscope 10 according to the embodiment. The microscope 10 according to the embodiment is an infrared microscope and is configured to include an infrared light source 11, a sample stage 12, a beam splitter 14, an infrared light detector 15, a revolver 18, and the like. The sample stage 12, the beam splitter 14, and the infrared light detector 15 are the same as those used in the above-described infrared microscope 90 of the related art and the like, and thus, the detailed description thereof will be omitted. In addition, in the infrared microscope 90 and the like, the light source 91 is configured so as to switch between the infrared light source 911 and the visible light source 912, but in the embodiment, only the infrared light source 11 is provided at a position corresponding to the light source 91. A half mirror 114 is provided in the same manner as the half mirror 914 in the light source 91 of the infrared microscope 90 of the related art.

A Cassegrain mirror 13 and a visible light image capture device 161 are attached to the revolver 18, and one of the Cassegrain mirror (described above) 13 and the visible light image capture device 161 is configured to be arranged just above the sample S held on the sample stage 12 by rotating the revolver 18.
The Cassegrain mirror 13 is similar to that used in the infrared microscope of the related art and corresponds to the above-described focusing optical element.

The visible light image capture device 161 corresponds to the above-described image capture device. In the embodiment, the visible light image capture device 161 is configured by combining a commercially available CMOS image sensor 1611 having 1.3 million pixels (1280 x 1024 pixels) and a lens 1612 having a focal length of 8 mm to have an imaging magnification of X0.27. The imaging area on the sample surface by the visible light image capture device 161 is about 10 x 13 mm. In addition, the distance between the sample surface and the CMOS image sensor 1611 is about 53 mm, and the distance between the sample surface and the front end of the lens 1612 is 31 mm. Since the former distance is shorter by 10 mm or more than the focal length of the Cassegrain mirror 13, the visible light image capture device 161 can be attached to the revolver 18 with a margin.

A ring-shaped visible light source 1613 that illuminates the sample surface is provided around the lens 1612. For such a ring-shaped visible light source, an existing one adopted in a portion of a general stereomicroscope can be used.

A magnified visible light image capture device 162 is attached to the lens barrel of the microscope 10 above the Cassegrain mirror 13 and the beam splitter 14. The magnified visible light image capture device 162 captures the image of the sample S through the Cassegrain mirror 13 in a state where the Cassegrain mirror 13 is arranged just above the sample S. The magnification of the image obtained by the magnified visible light image capture device 162 is larger than the magnification of the image obtained by the visible light image capture device 161, but the imaging area on the sample surface is narrow and is merely about 0.3 mm x 0.4 mm.

A method of using the microscope 10 according to the embodiment will be described. First, the sample S is mounted on the sample stage 12, and the revolver 18 is rotated, so that the visible light image capture device 161 is arranged just above the sample S as illustrated in Fig. 1. Then, while irradiating the sample S with the visible light from the visible light source 1613, the image of the sample S in the imaging area is captured by the visible light image capture device 161.

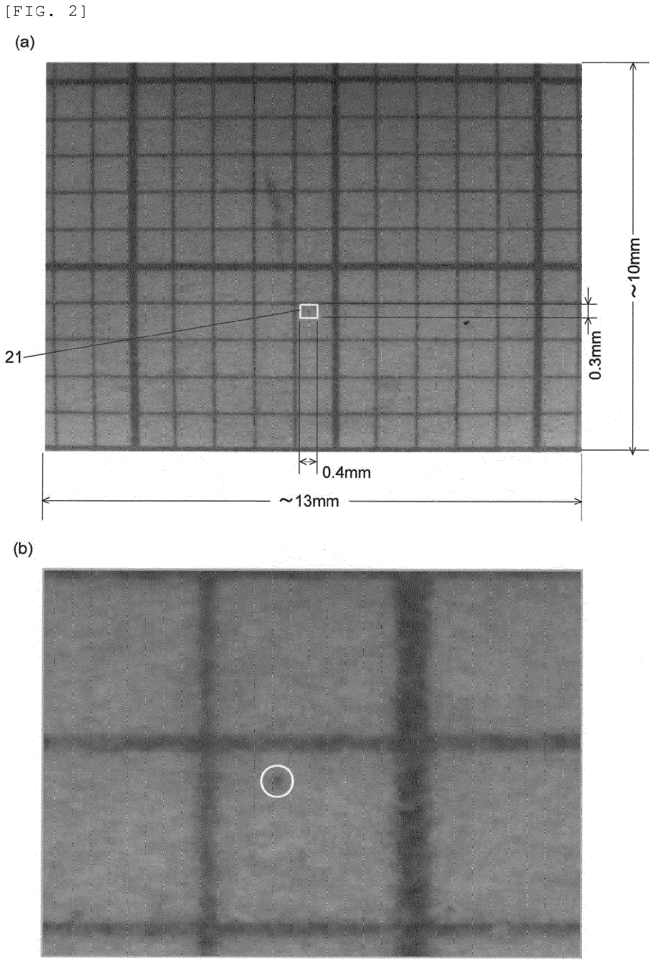

Fig. 2(a) illustrates an example of the image obtained by the visible light image capture device 161. The entire size of the area image-captured in the figure is within a range of about 10 mm x 13 mm on the sample S. In addition, in Fig. 2(a), a frame 21 having a size of 0.3 mm x 0.4 mm which is substantially the same size as the imaging area by the magnified visible light image capture device 162 is indicated by a solid line. In addition, solid lines other than the frame 21 in Fig. 2 (a) are lines drawn on a grid sheet placed on the sample stage 12 in order to make the dimensions easier to understand, and the interval between the lines is 1 mm. From the picture of Fig. 2(a), it can be understand that a point-like extraneous substance as a measurement object exists in the frame 21. Fig. 2 (b) illustrates a picture obtained by magnifying the picture of (a) five times by using image processing software. The extraneous substance exists in the magnified picture as indicated by a circle.

In the infrared microscope of the related art, since the image is magnified by the Cassegrain mirror, the image within merely about the same range as in Fig. 2 (b) is captured, whereas in the microscope 10 according to the embodiment, as illustrated in Fig. 2(a), since an image for positioning can be captured within a wider range, it is easy to search for the measurement object existing in a portion of a wide range.

Next, the positioning operation is performed on the sample S by moving the position of the sample S so that the measurement object of which position is specified by the obtained image is positioned at the center of the field of view. At this time, the sample stage 12 may be configured with a so-called XY stage which is movable vertically and horizontally, so that the position can be finely adjusted. In addition, in some cases, according to the accuracy of the position where the visible light image capture device 161 and the Cassegrain mirror 13 are installed, the center of the image obtained by the visible light image capture device 161 may be deviated from the position of the center in the infrared measurement. In this case, calibration may be performed in advance, and the position of the measurement object maybe adjusted to a position deviated by a predetermined distance in the longitudinal direction and the transverse direction from the center of the image for positioning.

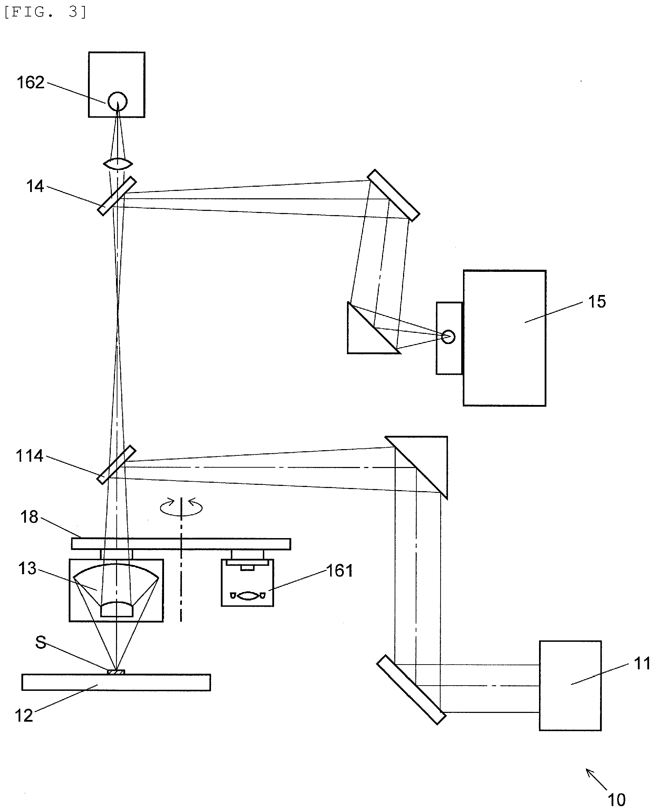

After the positioning is completed, as illustrated in Fig. 3, the revolver 18 is rotated, and the Cassegrain mirror 13 is arranged directly above the sample S. In this state, if the image of visible light passing through the Cassegrain mirror 13 is captured by the magnified visible light image capture device 162, the position of the measurement object can be checked again by using the magnified image. A sharper image can be obtained in the image captured by the magnified visible light image capture device 162 than in a case where the image captured by the visible light image capture device 161 is magnified with the same magnification by the image processing software. However, the imaging by the magnified visible light image capture device 162 is not an indispensable operation in the measurement by the infrared microscope, and thus, the magnified visible light image capture device 162 may be omitted in the microscope 10.

After arranging the Cassegrain mirror 13 just above the sample S in this manner, by irradiating the sample S with infrared light as measurement light from the infrared light source 11 through the Cassegrain mirror 13 and detecting the infrared light reflected from the sample S with the infrared light detector 15, the measurement is performed. Since the infrared measurement is the same as that performed by a general infrared microscope, the detailed description will be omitted. In addition, in the embodiment, the case of measuring the reflected light reflected from the sample S is described, and only the optical system for measuring the reflected light is illustrated. However, in the case of measuring the transmitted light transmitted through the sample S, the measurement may be performed by using an optical system that irradiates the sample S with infrared light from the lower side of the sample.

The present invention is not limited to the above embodiment.

For example, in the embodiment, a CMOS image sensor is used as the visible light image capture device 161, but a CCD image sensor or the like may be used instead. In addition, instead of the visible light image capture device 161, an infrared image sensor or the like may be used.

Instead of the ring-shaped visible light source 1613 provided around the lens 1612, a visible light source may be attached to the casing of the visible light image capture device 161 or the revolver 18. Alternatively, in a case where the microscope 10 is used under a condition that sufficient visible light can be obtained from natural light or room illumination light, the visible light source may be omitted.

In the above embodiment, the visible light image capture device 161 and the Cassegrain mirror 13 are mounted on the revolver 18, but one of the visible light image capture device 161 and the Cassegrain mirror 13 may be arranged on the sample S so as to be capable of switching the one of the visible light image capture device 161 and the Cassegrain mirror 13 to the other, and for example, a sliding type switching device that moves linearly may be used.

Although the infrared microscope has been described in the above embodiment, the same configuration may be adopted in the ultraviolet microscope.

### Explanations of Letters or Numerals

10: microscope (infrared microscope)
11, 911: infrared light source
114, 914: half mirror
12, 92: sample stage
13, 93: Cassegrain mirror
14, 94: beam splitter
15, 95: infrared light detector
161: visible light image capture device
1611: CMOS image sensor
1612: lens
1613: visible light source
162: magnified visible light image capture device
18: revolver
90, 90A, 90B: infrared microscope of the related art
91: light source
912: visible light source in infrared microscope of the related art
913: switching mirror
931: primary mirror of Cassegrain mirror
932: secondary mirror of Cassegrain mirror
96: visible light image capture device in infrared microscope of the related art
96A, 96B: second visible light image capture device

## Claims

1. A microscope comprising:
a) a sample holder holding a sample;
b) a measurement light source irradiating the sample held by the sample holder with irradiation light;
c) a focusing optical element focusing measurement light derived from the irradiation light transmitted through the sample or reflected from the sample;
d) a detection unit detecting the measurement light focused by the focusing optical element;
e) an image capture device capturing an image of the sample; and
f) an objective optical system switching unit arranged to switch one of the focusing optical element and the image capture device to the other at a position facing the sample.

2. The microscope according to claim 1, further comprising an image capture light source irradiating the sample with light having a wavelength detectable by the image capture device.

3. The microscope according to claim 1 or 2, wherein the objective optical system switching unit is a revolver switching the focusing optical element and the image capture device by rotation.
